# EUROPÄISCHE PATENTANMELDUNG

(11) **EP 1 273 640 A2**
(43) Veröffentlichungstag der Anmeldung: **08.01.2003**
(21) Anmeldenummer: 02011426.0
(22) Anmeldetag: 24.05.2002
(51) Int. Cl.: C09D 175/04, C08G 18/80

(54) **Nichtwässriges, wärmehärtendes Zweikomponenten-Beschichtungsmittel**

(30) Priorität: 06.07.2001 DE 10132938
(71) Anmelder: Degussa AG, 40474 Düsseldorf (DE)
(72) Erfinder: Lomölder, Rainer, Dr., 48153 Münster (DE); Plogmann, Friedrich, 44581 Castrop-Rauxel (DE); Speier, Peter, 45768 Marl (DE); Hoppe, Dirk, Dr., 48301 Nottuln (DE)

(57) **Zusammenfassung**

Nichtwässriges, wärmehärtendes Zweikomponenten-Beschichtungsmittel.

## Beschreibung

Die vorliegende Erfindung betrifft ein nichtwäßriges, wärmehärtendes Zweikomponenten-Beschichtungsmittel mit verbesserter Balance aus Kratzbeständigkeit und Beständigkeit gegen Umwelteinflüsse, insbesondere gegen sauren Regen.

Zweikomponenten-Polyurethan (PUR)-Beschichtungsmittel werden aufgrund ihrer im Vergleich zu klassischen, Aminoplastharz-vemetzenden Lacksystemen guten Beständigkeit gegen Umwelteinflüsse, insbesondere sauren Regen, zur Decklackierung in der Automobilindustrie eingesetzt (W. Wieczorrek in: Stoye/Freitag, Lackharze, S. 215 ff, C. Hanser Verlag, 1996; J. W. Holubka et al., J. Coat. Techn. Vol. 72, No. 901, S. 77, 2000). Hier finden in der Regel OH-funktionelle Poly(meth-)acrylatharze und Polyisocyanate auf der Basis von Hexamethylendiisocyanat (HDI) Verwendung. Die gute Beständigkeit gegen Umwelteinflüsse kann durch partielle Verwendung von IPDI-(Isophorondiisocyanat)-Polyisocyanaten nochmals deutlich verbessert werden (WO 93/05090). Nachteilig bei derartigen Modifizierungen ist jedoch eine gegenüber einer reinen HDI-Polyisocyanatvernetzung deutliche Einbuße in der Kratzbeständigkeit der Decklackierung (Industrie Lackierbetrieb, 61, S. 30. 1993).

Vor dem Hintergrund steigender Qualitätsanforderungen an die Automobilerstlackierung wird eine Verbesserung der erforderlichen Eigenschaften angestrebt.

Aufgabe der vorliegenden Erfindung war es, ein Beschichtungsmittel zu finden, das im ausgehärteten Zustand zu Beschichtungen mit verbesserter Balance aus Beständigkeit gegen Umwelteinflüsse und gleichzeitig hoher mechanischer Beständigkeit, insbesondere der Kratzbeständigkeit, führt.

Diese Aufgabe wurde durch die erfindungsgemäßen Zweikomponenenten (2K)-Beschichtungsmittel gelöst.

Gegenstand der Erfindung sind nichtwäßrige, wärmehärtende 2K-Beschichtungsmittel im wesentlichen enthaltend
A) eine lösemittelhaltige Polyolkomponente und
B) eine Vernetzerkomponente,
bestehend aus mindestens einem aliphatischen und/oder cycloaliphatische Polyisocyanat mit einer NCO-Funktionalität von 2-6,
wobei 0,1 bis 95 Mol-% der ursprünglich vorhandenen freien Isocyanatgruppen des Polyisocyanats mit N,N-Bis-(3-trialkoxysilylpropyl)-aminen umgesetzt sind,
im Gewichtssverhältnis A) und B) von 6 : 1 bis 1 : 2, bezogen auf die nicht flüchtigen organischen Bestandteile.

Umsetzungsprodukte von Polyisocyanaten mit sekundären 3-Aminopropyltrialkoxysilanen sind bekannt. So werden mit Malein- oder Fumarsäureester modifizierte 3-Aminopröpyltrialkoxysilane mit Isocyanatprepolymeren zur Reaktion gebracht, um die Haftung entsprechender Beschichtungssysteme oder Dichtungsmassen zu verbessern und die nachteilige Entwicklung von CO₂ zu reduzieren (EP-596 360, USP-6,005,047). Derartige Isocyanataddukte werden auch zur Herstellung wäßriger PUR-Dispersionen (EP-924 231) oder als Härterkomponente für wäßrige 2K-PUR-Systeme (EP-872 499, EP-949 284) beschrieben. In der überwiegenden Anzahl der Fälle werden die Beschichtungen bei Umgebungstemperatur bzw. leicht erhöhter Temperatur unter dem Einfluß von Feuchtigkeit gehärtet.

In EP-549 643, WO 92/11327, WO 92/11328 und USP-5,225,248 ist die Verwendung silangruppenhaltiger Harze in nichtwäßrigen, wärmehärtenden Klarlacken für die Automobilerstlackierung zur Verbesserung der Beständigkeiten, insbesondere der gegen sauren Regen beschrieben. Hier werden Klarlacke auf Basis silangruppenhaltiger Poly(meth-)acrylatharze, hydroxylgruppenhaltiger Poly(meth-)acrylatharze sowie in der Regel Aminoplastharzen als Vernetzer eingesetzt. Derartige Klarlacke gelten gemeinhin als säurebeständig, erweisen sich jedoch in dieser Eigenschaft den 2K-PUR-Lacken als deutlich unterlegen (J. W. Holubka et al., J. Coat. Techn. Vol. 72, No. 901, S. 77, 2000).
Die Lösung der Aufgabe war insofern überraschend, da eine Verbesserung der Beständigkeiten von nichtwäßrigen 2K-PUR-Systemen durch eine Modifizierung mit N,N-Bis-(3-trialkoxysilylpropyl)-aminen nicht zu erwarten war.

Prinzipiell sind alle Polyole mit mehr als zwei OH-Gruppen als Polyolkomponente A geeignet.

Als Polyolkomonente A) sind hydroxylgruppenhaltige (Meth-)acryl-Copolymerisate, gesättigte Polyesterpolyole, Polycarbonatdiole, Polyetherpolyole oder urethan- und estergruppenhaltige Polyole allein oder in Mischungen besonders geeignet.

Als hydroxylgruppenhaltige (Meth)acryl-Copolymerisate können Harze mit einer Monomerzusammensetzung, wie sie z. B. in WO 93/15849 (S. 8, Zeile 25 bis S. 10, Zeile 5), oder auch in DE 195 29124 beschrieben sind, verwendet werden. Dabei sollte die durch anteilige Verwendung von (Meth)acrylsäure als Monomer einzustellende Säurezahl des (Meth)acryl-Copolymerisates 0 - 30, vorzugsweise 3 - 15 betragen. Das zahlenmittlere Molgewicht (ermittelt durch Gelpermeationschromatographie gegen einen Polystyrolstandard) des (Meth)acryl-Copolymerisates beträgt vorzugsweise 2 000-20 000 g/mol, die Glasübergangstemperatur beträgt vorzugsweise - 40°C bis + 60 °C. Der durch anteilige Verwendung von Hydroxyalkyl(meth)acrylaten einzustellende Hydroxylgehalt der erfindungsgemäß zu verwendenden (Meth)acryl-Copolymerisate beträgt vorzugsweise 70 - 250 mg KOH/g, besonders bevorzugt 90 - 190 mg KOH/g.

Erfindungsgemäß geeignete Polyesterpolyole sind Harze mit einer Monomerzusammensetzung aus Di- und Polycarbonsäuren und Di- und Polyolen, wie sie z. B. in Stoye/Freitag, Lackharze, C. Hanser Verlag, 1996, S. 49 oder auch in WO 93/15849 beschrieben sind. Als Polyesterpolyole können auch Polyadditionsprodukte von Caprolacton and niedermolekulare Di- und Triole, wie z. B. unter der Bezeichnung TONE (Union Carbide Corp.) oder CAPA (Solvay/Interox) erhältlich, eingesetzt werden. Das rechnerisch bestimmte zahlenmittlere Molgewicht beträgt vorzugsweise 500-5 000 g/mol, besonders bevorzugt 800 3 000 g/mol, die mittlere Funktionalität 2,0 - 4,0, bevorzugt 2,0 - 3,5.

Als erfindungsgemäß zu verwendende urethan- und estergruppenhaltige Polyole kommen prinzipiell solche zum Einsatz, wie sie in EP-140 186 beschrieben sind. Bevorzugt werden urethan- und estergruppenhaltige Polyole, zu deren Herstellung HDI, IPDI, Trimethylhexamethylendiisocyanat (TMDI) oder (H₁₂-MDI) verwendet werden. Das zahlenmittlere Molgewicht beträgt vorzugsweise 500-2000 g/mol, die mittlere Funktionalität 2,0 - 3,5.

Die Vernetzerkomponente B) besteht aus mindestens einem aliphatischen und/oder cycloaliphatische Polyisocyanat, mit einer NCO-Funktionalität von 2 - 6, wobei 0,1 bis 95 Mol-% der ursprünglich vorhandenen freien Isocyanatgruppen des Polyisocyanats mit N,N-Bis-(3-trialkoxysilylpropyl)-aminen umgesetzt sind.

Das Polyisocyanat der Komponente B) basiert auf Hexamethylendiisocyanat (HDI), Isophorondiisocyanat (IPDI), Bis-(4-isocyanatocyclohexyl)methan,(H₁₂-MDI), Tetramethylxylylendiisocyanat (TMXDI), 1,3-Bis(isocyanatomethyl)cyclohexan (1,3-H-XDI), 2,2,4- und 2,4,4-Trimethyl-1,6-diisocyanatohexan (TMDI), 2-Methylpentendiisocyanat-1,5 (MPDI), Norbomyldiisocyanat (NBDI), Lysintriisocyanat (LTI) oder 4-Isocyanatomethyl-1,8-octamethylendiisocyanat (NTI) oder Gemischen dieser Diisocyanate und weist eine mittlere NCO-Funktionalität von 2,0-6,0 auf.

Im Falle einer Funktionalität von größer zwei werden vorzugsweise Polyisocyanate - allein oder in Mischungen - wie sie durch Trimerisierung, Dimerisierung, Urethan-, Biuret- oder Allophanatbildung hergestellt werden sowie auch Abmischungen dieser mit Monomeren, verwendet. Derartige Polyisocyanate oder Polyisocyanat/Monomer-Gemische können gegebenenfalls mit Di- oder polyfunktionellen, H-aciden Komponenten wie z. B. Di- oder Polyolen und/oder Di- oder Polyaminen, zusätzlich kettenverlängert oder verzweigt werden.

Die Modifizierung der Polyisocyanate zur aliphatischen und/oder cycloaliphatischen Vernetzerkomponente B) erfolgt durch Umsetzung von Polyisocyanaten mit N,N-Bis-(3-trialkoxysilylpropyl)-aminen mit der allgemeinen Formel I

NH((CH₂)₃-Si(OR¹OR²OR³))₂ (I)

wobei R¹, R² und R³ gleichzeitig oder unabhängig voneinander eine Alkyl- oder iso-Alkylgruppe mit 1 - 8 Kohlenstoffatomen bedeuten, umgesetzt sind.

Bevorzugte Verbindungen sind die folgenden:
N,N-Bis-(3-trimethoxysilylpropyl)-amin,
N,N-Bis-(3-triethoxysilylpropyl)-amin,
N,N-Bis-(3-tri-i-propoxysilylpropyl)-amin.

Eine weitere Herstellungsvariante der Vernetzerkomponente B) besteht in der partiellen Umsetzung monomerer Diisocyanate mit den o. g. Verbindungen der Formel I und nachfolgender Überführung in das Polyisocyanat durch Trimerisierung, Dimerisierung, Urethan-, Biuret- oder Allophanatbildung und mit anschließender destillativer Abtrennung von Restmonomeren (falls erforderlich). Auch Gemische aus nicht-modifizierten Polyisocyanaten und vollständig umgesetzten Polyisocyanaten sind erfindungsgemäß.

Die Umsetzung erfolgt in flüssiger Phase, d. h. gegebenenfalls unter Mitverwendung von in der PUR-Technologie üblichen, aprotischen Lösemitteln, bei Temperaturen unter 130 °C, gegebenenfalls unter Mitverwendung von Katalysatoren und/oder Stabilisatoren.

Das erfindungsgemäße nichtwässrige 2K-Beschichtungsmittel enthält in der Regel in der Lacktechnologie bekannte Lösemittel, z. B. Ketone, Ester oder Aromaten und Hilfsstoffe wie Stabilisatioren, Lichtschutzmittel, Katalysatoren, Verlaufsmittel oder Rheologiehilfsmittel, wie z. B. sog. "sag control agents", Mikrogele oder pyrogenes Siliciumdioxid in typischen Konzentrationen.

Als Katalysatoren kommen insbesondere solche in Betracht, die sich auf dem Gebiet der PUR-Technologie bewährt haben, wie z. B. organische Sn(IV)-, Sn(II)-, Zn-, Bi-Verbindungen oder tert. Amine (PUR-Katalysatoren).
Auch Sulfonsäure-basierende Katalysatoren in latenter Form als aminneutralisierte Komponente oder als kovalentes Addukt an Epoxid-haltige Verbindungen, wie sie insbesondere in der DE-OS 23 56 768 beschreiben sind, sind geeignete Katalysatoren.
Desweiteren können Katalysatoren eingesetzt werden, die die Reaktion der Alkoxisilangruppen mit den OH-Gruppen der erfindungsgemäßen Harzkomponenten oder die Hydrolyse beschleunigen. Neben den oben beschriebenen Katalysatoren sind dies vor allem Aluminiumtitanate sowie Aluminium- und Zirkonchelate.

Besonders vorteilhaft werden Kombinationen aus PUR-Katalysatoren und blockierten, Sulfonsäure-basierenden Katalysatoren und/oder Aluminiumtitanate sowie Aluminium- und Zirkonchelate verwendet. Die Katalysatorkonzentrationen betragen dabei 0,01 - 0,5 Gew.-% PUR-Katalysator und 0,1 - 7 Gew.-% der o. g. Katalysatoren, bezogen auf nicht flüchtige organische Bestandteile. Diese Ausführungsform ist eine besonders bevorzugte Variante der erfindungsgemäßen Beschichtungsmittel.

Falls erforderlich, können in die Komponente A) auch in der Lacktechnologie übliche anorganische oder organische Farb- und/oder Effektpigmente eingearbeitet werden.

Das Gewichtsverhältnis der Komponenten A) und B) im erfindungsgemäßen Beschichtungsmittels beträgt 6:1 bis 1:2, bezogen auf nicht flüchtige organische Bestandteile.

Die Komponenten A) und B) werden unmittelbar vor der Verarbeitung innig vermischt bis eine homogene Lösung entstanden ist. Die Mischung kann vorteilhafterweise großtechnisch auch in sogenannten 2-Komponentenanlagen erfolgen.

Das erfindungsgemäße Beschichtungsmittel kann nach bekannten Verfahren wie Spritzen, Tauchen, Walzen oder Rakeln aufgetragen werden. Dabei kann das zu beschichtende Substrat bereits mit weiteren Lackschichten versehen sein. Besonders geeignet ist das erfindungsgemäße Beschichtungsmittel für die Verwendung als Klarlack, wobei dieser im sogenannten Naß-in-Naß-Verfahren auf eine oder mehrere Basislackschichten aufgetragen wird, und diese dann gemeinsam gehärtet werden.

Die Aushärtung des erfindungsgemäßen Beschichtungsmittels erfolgt im Temperaturbereich von 100 - 180 °C.

Die erfindungsgemäßen Beschichtungsmittel finden Verwendung zur Herstellung von Klar- oder Decklackierungen im Kraftfahrzeugbereich.
Die Erfindung wird durch die folgenden Beispiele näher erläutert.

### Beispiele:

Sofern nicht anderes angegeben, beziehen sich die Mengenangaben auf das Gewicht.

### I. Herstellung der Vernetzerkomponente B1:

73,5 Gew.-Teile VESTANAT T 1890 L (70 %-ige Lsg. von IPDI-Polyisocyanat (Isocyanurat) in Butylacetat/Solvesso 100=1/2, Degussa AG) und 7,9 Gew.-Teile eines Lösemittelgemisches aus Butylacetat/Solvesso 100 =1/2 werden vorgelegt. Unter Kühlung werden 17,9 Gew.-Teile N,N-Bis-(3-triethoxysilylpropyl)-amin (DYNASYLAN 1122, Degussa AG) während 1 h zugetropft, wobei die Temperatur 30 °C nicht übersteigt. Nach vollständiger Silanzugabe wird 1 h bei Umgebungstemperatur gerührt und 0,7 Gew.-Teile Irganox 1135 zugesetzt. Der Festkörpergehalt der Lösung beträgt 70 %, der freie NCO-Gehalt 7,1 %, die Viskosität (DIN 53019, 23 °C) 400 mPas.
Der Silanisierungsgrad beträgt 20 %, bezogen auf die eingesetzten NCO-Gruppen.

### II. Herstellung der Vernetzerkomponente B2:

55,2 Gew.-Teile DESMODUR N 3300 (HDI-Polyisocyanat (Isocyanurat), Bayer AG) und 20,0 Gew.-Teile Solvesso 100 werden vorgelegt. Unter Kühlung werden 24,1 Gew.-Teile N,N-Bis-(3-triethoxysilylpropyl)-amin (DYNASYLAN 1122, Degussa AG) während 1 h zugetropft, wobei die Temperatur 30 °C nicht übersteigt. Nach vollständiger Silanzugabe wird 1 h bei Umgebungstemperatur gerührt und 0,7 Gew.-Teile Irganox 1135 zugesetzt. Der Festkörpergehalt der Lösung beträgt 80 %, der freie NCO-Gehalt 9,5 %, die Viskosität (DIN 53019, 23 °C) 300 mPas.
Der Silanisierungsgrad beträgt 20 %, bezogen auf die eingesetzten NCO-Gruppen.

### III.Herstellung der Vernetzerkomponente B3:

58,5 Gew.-Teile DESMODUR N 3300 (HDI-Polyisocyanat (Isocyanurat), Bayer AG) und 20,0 Gew.-Teile Solvesso 100 werden vorgelegt. Unter Kühlung werden 20,7 Gew.-Teile N,N-Bis-(3-trimethoxysilylpropyl)-amin (SILQUEST 1170, C. K. Witco) während 1 h zugetropft, wobei die Temperatur 30 °C nicht übersteigt. Nach vollständiger Silanzugabe wird 1 h bei Umgebungstemperatur gerührt und 0,7 Gew.-Teile Irganox 1135 zugesetzt. Der Festkörpergehalt der Lösung beträgt 80 %, der freie NCO-Gehalt 10.2 %, die Viskosität (DIN 53019, 23 °C) 360 mPas.
Der Silanisierungsgrad beträgt 20 %, bezogen auf die eingesetzten NCO-Gruppen.

### IV. Herstellung der erfindungsgemäßen 2K-Beschichtungsmittel

In Tabelle 1 sind die Zusammensetzungen der erfindungsgemäßen 2K-Beschichtungsmittel Beispiele 1-5 und der Vergleichsbeispiele Vergleich 1, Vergleich 2, aufgeführt.

Dabei wurden zur Herstellung zunächst sämtliche Bestandteile mit Ausnahme der Polyisocyanate (Positionen 1 - 4 in Tabelle 1) bis zur vollständigen Homogenisierung innigst vermischt. Unmittelbar vor der Verarbeitung wird die zuvor hergestellte Mischung und die Vernetzerkomponente B bis zur Homogenität gemischt.

Bei Verwendung von 2-Komponentenanlagen wurden Teile der Lösemittel (Pos. 11, 12, Tab. 1) zur Vorverdünnung des Polyisocyanates verwendet, um günstige Viskositäten jeder Komponente und günstige Mischungsverhältnisse einzustellen.

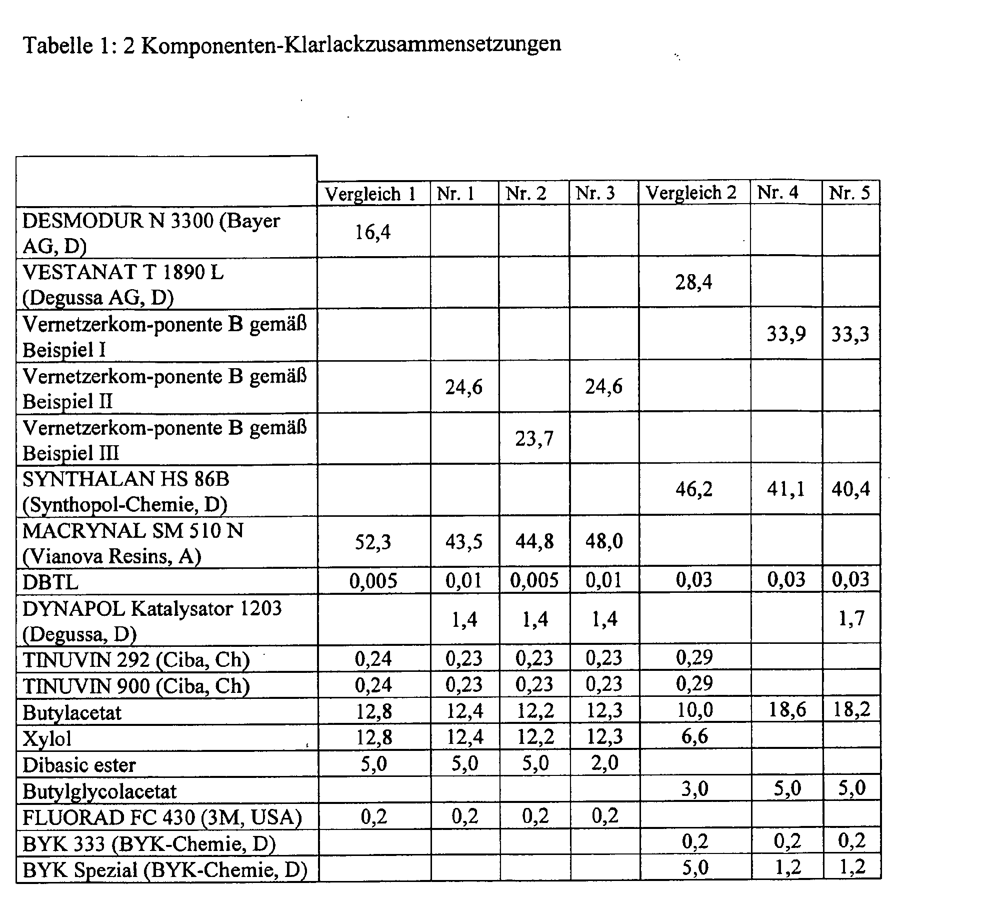

2K-Klarlacke wurden gemäß den in der Tabelle 1 angegebenen Mengenteilen formuliert. Die Viskosität betrug, bestimmt als Auslaufzeit im DIN-4-Becher bei 23 °C, ca. 20 Sekunden.

Zur Prüfung der Kratzbeständigkeit wurden die Klarlacke in einem Naß-in-Naß-Verfahren auf einen schwarzen Basecoat (Permacron, Fa. Spies Hecker, Spritzauftrag, 10 min Ablüftzeit bei Umgebungstemperatur) im Spritzauftrag appliziert. Die Aushärtung erfolgte nach 5 min Ablüftzeit 25 min 140 °C. Die Trockenfilmschichtdicke der Klarlacke betrug ca. 35 µm. Nach 14 d Lagerung bei Umgebungstemperatur erfolgte die Bestimmung der Kratzbeständigkeit.

Zur Beurteilung der Säurebeständigkeit wurden Klarlacke gem. obigen Verfahrens auf einen silber-metallic Basecoat (STANDOX VWL 97A, Diamantsilber der Fa. Herberts) auf sog. Gradientenofenbleche (BYK-Gardner) appliziert und ausgehärtet.

Mechanische Eigenschaften und allgemeine Beständigkeiten wurden von einschichtigen Klarlacken, appliziert auf phosphatierte Stahlbleche (Bonder 26) und gehärtet bei 25 min 140 °C, erfaßt.

### Prüfung auf Kratzbeständigkeit:

Ein 45 mm x 20 mm Nylongewebe, Maschenweite 31 µm, wird mit einem 2 Kg-Gewicht beschwert, auf die Prüfplatte, die ihrerseits auf einem Schlitten fixiert ist, aufgelegt und arretiert. Nach Auftrag von 1ml einer aufgerührten, 0,25%-igen Waschmittellösung (Persil) unmittelbar vor der Prüffläche wird die Prüfplatte mit einer maximalen Auslenkung von jeweils ca. 3,5 cm oszilliert. Nach 80 Doppelhüben (1 s⁻¹) wird die verbliebene Waschflüssigkeit mit Leitungswasser abgespült und mit Druckluft getrocknet. Jeweils vor und nach der Prüfung werden Glanzmessungen (20°-Winkel) vorgenommen.

Erholung (reflow) unter Temperatureinfluß: Die geschädigte Prüfplatte wird 2 h bei 60 °C in einem Umluftofen gelagert und anschließend erneut der Glanz der Beschichtung gemessen.

### Prüfung auf Säurebeständigkeit:

Auf die Prüfbleche werden mittels einer Pipette Tropfen (ca. 0,25 ml) einer 20%-igen Schwefelsäurelösung im Abstand von 2 cm aufgebracht. In einem Temperaturgradientenofen (BYK-Gardner) werden sie 30 min einem Temperaturgradienten in Längsrichtung des Bleches von 35 - 80 °C unterworfen. Anschließend werden mit Wasser Reste der Säure abgewaschen und nach 24 h einer visuellen Prüfung unterzogen. Zur Beurteilung der Beständigkeit werden der Bereich (Temperatur) eines ersten sichtbaren Angriffs des Klarlacks sowie der einer Zerstörung des Basecoats in °C angegeben. Je höher die jeweilige Temperatur, desto höher ist die Beständigkeit des Klarlackes zu bewerten.

**Tabelle 2**

| Mechanische Kenndaten und Beständigkeiten von Klarlacken | | | | | | | |
|---|---|---|---|---|---|---|---|
| | Beispiel | | | | | | |
| | Vergleich 1 | Nr. 1 | Nr. 2 | Nr. 3 | Vergleich 2 | Nr. 4 | Nr. 5 |
| Schichtdicke (µm) | 40 | 35 | 35 | 30 | 45 | 30 | 30 |
| Härte, König (s) | 195 | 190 | 193 | 189 | 160 | 132 | 160 |
| Erichsen-Tiefung (mm) | 7,0 | 6,0 | 5,0 | 7,0 | 7,5 | 8,0 | 5,0 |
| Superbenzin beständigkeit | sehr gut | sehr gut | sehr gut | sehr gut | sehr gut | sehr gut | Sehr gut |
| MEK-Wischer beständigkeit (Doppelhübe) | > 150 | > 150 | > 150 | > 150 | > 150 | > 150 | > 150 |
| | | | | | | | |

| Säurebeständigkeit: | | | | | | | |
|---|---|---|---|---|---|---|---|
| Klarlackangriff bei °C | 53 | 50 | 47 | 50 | 56 | 46 | 47 |
| Zerstörung Basecoat bei °C | 66 | 60 | 61 | 63 | 72 | 62 | 75 |
| | | | | | | | |

| Kratzbeständigkeit: | | | | | | | |
|---|---|---|---|---|---|---|---|
| Ausgangsglanz, 20 ° | 85,2 | 87,7 | 88,1 | 86,9 | 78,8 | 80,5 | 82,4 |
| Glanzdifferenz nach Test, 20° | 30,5 | 17,6 | 12,0 | 15 8 | 59,3 | 56,9 | 20,5 |
| Glanzdifferenz zu Ausgangsgl. nach reflow (60 °C), 20 ° | 19,4 | 10,6 | 7,7 | 8,6 | 12,7 | 15,8 | 5,6 |

Die ausgehärteten Klarlacke weisen ein sehr vergleichbares mechanisches Eigenschaftsprofil sowie vergleichbare allgemeine Beständigkeiten auf.

Die Klarlacke gemäß der Beispiele 1 und 2 zeigen trotz des geringeren OH:NCO-Verhältnisses von 1,0:0,8 ähnliche mechanische Daten und nur eine geringfügig niedrigere Säurebeständigkeit als das Vergleichsbeispiel 1(OH:NCO = 1,0:1,0), bei deutlich verbesserter Kratzfestigkeit und signifikant verbessertem reflow-Verhalten. Der Vergleich der Beispiele 1 und 2 zeigt, dass sowohl N,N-Bis-(3-triethoxysilylpropyl)-amin (Beispiel 1), als auch N,N-Bis-(3-trimethoxysilylpropyl)-amin (Beispiel 2) eingesetzt werden können.

Beispiel 3 zeigt, dass auch bei einem OH:NCO-Verhältnis von 1,0 : 0.6 ein ähnlich gutes Eigenschaftsprofil wie in den Beispielen 1 und 2 erreicht wird.

Der Klarlack gemäß des Beispiels 5 zeigt trotz des geringeren OH/NCO-Verhältnisses von 1,0 : 0,8 ähnliche mechanische Daten und nur eine geringfügig niedrigere Säurebeständigkeit als das Vergleichsbeispiel 2 (OH:NCO = 1,0 : 1,0), bei deutlich verbesserter Kratzfestigkeit und signifikant verbessertem reflow-Verhalten.

Das Beispiel 4 zeigt, das beim einem OH/NCO-Verhältnisses von 1,0 : 0,8 den positiven Einfluss einer zusätzlichen Sulfonsäure als Katalysator.

## Patentansprüche

1. Nichtwässriges, wärmehärtendes 2K-Beschichtungsmittel im wesentlichen enthaltend
A) eine lösemittelhaltige Polyolkomponente und
B) eine Vernetzerkomponente,
bestehend aus mindestens einem aliphatischen und/oder cycloaliphatischen Polyisocyanat mit einer NCO-Funktionalität von 2-6, wobei 0,1 bis 95 Mol-% der ursprünglich vorhandenen freien Isocyanatgruppen des Polyisocyanats mit N,N-Bis-(3-trialkoxysilylpropyl)-aminen umgesetzt sind,
im Gewichtssverhältnis A) und B) von 6 : 1 bis 1 : 2, bezogen auf die nicht flüchtigen organischen Bestandteile.

2. Nichtwässriges, wärmehärtendes 2K-Beschichtungsmittel nach Anspruch 1,
**dadurch gekennzeichnet,**
**dass** als Polyolkomponente A) hydroxylgruppenhaltige (Meth-)acryl-Copolymerisate, gesättigte Polyesterpolyole, Polycarbonatdiole, Polyetherpolyole oder urethan- und estergruppenhaltige Polyole oder Mischungen enthalten sind.

3. Nichtwässriges, wärmehärtendes 2K-Beschichtungsmittel nach mindestens einem der Ansprüche 1 bis 2,
**dadurch gekennzeichnet,**
**dass** (Meth-)acryl-Copolymerisate mit einem zahlenmittleren Molgewicht von 2.000 bis 20.000 g/mol, mit einer Glasübergangstemperatur von - 40 bis + 60 °C und einem Hydroxylgehalt von 70 bis 250 mg KOH/g, bezogen auf die nicht flüchtigen Bestandteile, enthalten sind.

4. Nichtwässriges, wärmehärtendes 2K-Beschichtungsmittel nach mindestens einem der Ansprüche 1 bis 2,
**dadurch gekennzeichnet,**
**dass** Polyesterpolyole mit einer mittleren Funktionalität von 2,0 bis 4,0 und einem zahlenmittleren Molgewicht von 500 bis 5.000 g/mol enthalten sind.

5. Nichtwässriges, wärmehärtendes 2K-Beschichtungsmittel nach mindestens einem der Ansprüche 1 bis 2,
**dadurch gekennzeichnet,**
**dass** urethan- und estergruppenhaltige Polyole auf der Basis von HDI, IPDI, TMDI und/oder H₁₂-MDI mit einem zahlenmittleren Molgewicht von 500 bis 2.000 g/mol enthalten sind.

6. Nichtwässriges, wärmehärtendes 2K-Beschichtungsmittel nach mindestens einem der Ansprüche 1 bis 5,
**dadurch gekennzeichnet,**
**dass** das Polyisocyanat der Vernetzerkomponente B auf den folgenden Diisocyanaten basiert:
HDI, IPDI, H₁₂-MDI, TMXDI, 1,3-H-XDI, TMDI, MPDI, NBDI, LTI und/oder NTI.

7. Nichtwässriges, wärmehärtendes 2K-Beschichtungsmittel nach Anspruch 6,
**dadurch gekennzeichnet,**
**dass** die Vernetzerkomponente B) Polyisocyanate, erhalten durch Trimerisierung, Dimerisierung, Urethan-, Biuret- oder Allophanatbildung oder Gemische enthält.

8. Nichtwässriges, wärmehärtendes 2K-Beschichtungsmittel nach mindestens einem der Ansprüche 6 bis 7,
**dadurch gekennzeichnet,**
**dass** die Vernetzerkomponente B) Mischungen von Polyisocyanaten und monomeren Diisocyanaten enthält.

9. Nichtwässriges, wärmehärtendes 2K-Beschichtungsmittel nach mindestens einem der Ansprüche 6 bis 8,
**dadurch gekennzeichnet,**
**dass** die Polyisocyanate zusätzlich kettenverlängert oder verzweigt sind.

10. Nichtwässriges, wärmehärtendes 2K-Beschichtungsmittel nach mindestens einem der Ansprüche 6 bis 9,
**dadurch gekennzeichnet,**
**dass** die Polyisocyanate mit N,N-Bis-(3-trialkoxysilylpropyl)-aminen der allgemeinen Formel I
NH((CH₂)₃-Si(OR¹OR²OR³))₂ (I)
wobei R¹, R² und R³ gleichzeitig oder unabhängig voneinander eine Alkyl- oder iso-Alkylgruppe mit 1-8 Kohlenstoffatomen bedeuten, umgesetzt sind.

11. Nichtwässriges, wärmehärtendes 2K-Beschichtungsmittel nach Anspruche 10,
**dadurch gekennzeichnet,**
**dass** die folgenden Silane allein oder in Mischungen eingesetzt werden:
N,N-Bis-(3-trimethoxysilylpropyl)-amin,
N,N-Bis-(3-triethoxysilylpropyl)-amin,
N,N-Bis-(3-tri-i-propoxysilylpropyl)-amin.

12. Nichtwässriges, wärmehärtendes 2K-Beschichtungsmittel nach mindestens einem der Ansprüche 1 bis 11,
**dadurch gekennzeichnet**,
das Lösemittel und Hilfsstoffe enthalten sind.

13. Nichtwässriges, wärmehärtendes 2K-Beschichtungsmittel nach mindestens einem der Ansprüche 1 bis 12,
**dadurch gekennzeichnet,**
**dass** als Hilfsstoffe Stabilisatoren, Lichtschutzmittel, Katalysatoren, Verlaufsmittel, Rheologiehilfsmittel, Mikrogele, Pigmente und/oder pyrogenes Siliciumdioxid enthalten sind.

14. Nichtwässriges, wärmehärtendes 2K-Beschichtungsmittel nach mindestens einem der Ansprüche 1 bis 13,
**dadurch gekennzeichnet,**
**dass** als Katalysatoren organische Sn(IV)-, Sn(II)-, Zn-, Bi-Verbindungen oder tert. Amine (PUR-Katalysatoren) enthalten sind.

15. Nichtwässriges, wärmehärtendes 2K-Beschichtungsmittel nach mindestens einem der Ansprüche 1 bis 14,
**dadurch gekennzeichnet,**
**dass** als Katalysatoren Sulfonsäure-basierende Katalysatoren in latenter Form als amineutralisierte Komponente oder als kovalentes Addukt an Epoxid-haltige Verbindungen, und/oder Aluminiumtitanate und/oder Aluminium- und/oder Zirkonchelate enthalten sind.

16. Nichtwässriges, wärmehärtendes 2K-Beschichtungsmittel nach mindestens einem der Ansprüche 1 bis 13,
**dadurch gekennzeichnet,**
**dass** als Katalysatoren 0,01-0,5 Gew.-% PUR-Katalysator und 0,1-7 Gew.-% Katalysatoren gemäß Anspruch 15, bezogen auf nicht flüchtige organische Bestandteile, enthalten sind.
